# EUROPEAN PATENT APPLICATION

(11) **EP 1 677 306 A1**
(43) Date of publication of application: **05.07.2006**
(21) Application number: 05075012.4
(22) Date of filing: 04.01.2005
(51) Int. Cl.: G11B 27/32, G11B 20/12, G06F 12/16, G06F 3/06

(54) **Method for changing operation on a storage medium from a current file system to a new or updated file system**

(71) Applicant: DEUTSCHE THOMSON-BRANDT GMBH, 78048 Villingen-Schwenningen (DE)
(72) Inventor: Winter, Marco, 30173 Hannover (DE)
(74) Representative: Hartnack, Wolfgang

(57) **Abstract**

The invention relates to changing the file system on a storage medium. A switch is carried out from a current file system to a new file system. While keeping valid the current file system, new file system data items (51, 53, 521-561; 91-93, 97, 941-971) are written (13) on the storage medium, except a short data item (21, 71) required for activating or validating the new file system data items. Thereafter the short data item is written, thereby activating the new file system. The short data can be written even following a power failure in a recorder into which the storage medium is inserted, whereby that write operation is carried out using shortly remaining power in the recorder.

## Description

The invention relates to a method for changing operation on a storage medium from a current file system to a new or updated file system, e.g. an optical disc.

### Background

For backup purposes it may be necessary to store redundant files in a non-journaling file system, for example an optical disc. However, a power failure during write operation may lead to inconsistencies of the disc data. This is particularly dangerous for applications that are based on optical discs like BD-RE, DVD+RW, DVD-RW, and CD-RW.

One solution would be to apply a journaling file system, e.g. NTFS (New Technology File System by www.NTFS.com). But such system can not be used for optical discs because of the many re-write cycles required, and for the above-mentioned applications the file system is already fixed. E.g. for DVD-Video it is UDF 1.02 and ISO 9660, and for Blu-ray disc (BD) it is JAFS (Java Application Framework Suite) or UDF. The drawbacks of many re-write cycles are the limited maximum number (e.g. 1000) of re-write cycles feasible with a DVD-RW disc, and that greater optical head jumps are much more time consuming than greater harddisc head jumps are.

Another solution would be deleting the old redundant files at first, then deleting the old original files, then writing the new original files, and then writing the new redundant file. But if a power failure occurs during one of these multiple steps a very incomplete directory structure may result. If the power failure would occur just after deleting the original files, the whole content would no more be accessible any longer. Another disadvantage is that for each update request several re-writing cycles would be necessary for updating the disc.

Another solution would be overwriting the old original files and then overwriting the redundant files. But a power failure during this process would lead to a completely inconsistent file and directory structure.

### Invention

In some recorder applications redundant or auxiliary information files are stored on an optical disc in order to be capable of accessing the disc content even if the main information file of that disc is defect. If such main information file needs an update, that file and its redundant copy or copies must be re-written on the storage medium.

A problem to be solved by the invention is to update on a storage medium an information file as well as one or more redundant copies of it such that even a power failure or a storage medium eject command during the related writing operations does not cause any inconsistence in the file system of the storage medium. This problem is solved by the method disclosed in claim 1.

Typical optical disc applications have a very limited capacity for storing the file and directory structure of the disc, e.g. Blu-ray BD-RE and DVD-VR discs. The invention facilitates storage of critical data and even redundant data in a secure way. The data are stored in a special order. In a first step the new but still invalid file system data is stored in parallel to the current valid file system data. In a second step, only one block inside the file system data is replaced. This replaced block activates the new file system data prepared in parallel, i.e. one written block switches the whole file system data from the previous to the current state.
Only one short write process concerning only few data makes valid the new or updated files for the disc's file system. Thereby the probability of inconsistencies inside the file system due to a power failure or eject operation is strongly reduced. Even common updates of the disc data (e.g. sessions) become more stable when using the invention.
The file system update is carried out as completely as possible in the form of a parallel file system, i.e. all the disc directories are written in currently empty blocks of the disc (a block may be identical with a sector). The minimum amount of remaining file descriptors is written to the disc in order to switch from the old file system to the new file system. Thereby in a very short time the complete file system is updated. Because of this short time required, even in case of a disc eject request or a power failure that minimum amount of remaining file descriptors can be written to the disc. Carrying out disc ejection can be delayed for some milli- or microseconds, and in case of power failure the energy stored in e.g. power supply capacitors in a recorder in which the storage medium is inserted is sufficient to still carry out this short write operation. Advantageously the file system is much more stable because the amount of critical write processes is reduced strongly.

An advantageous effect of the invention is that different blocks are used for the parallel file system, which leads to a reduced number of re-write cycles for the same optical disc blocks in case the storage medium is a re-writable disc (e.g. CD-RW, DVD-RW or BD-RE), i.e. the overall maximum number of successful recording operations is increased.

In principle, the inventive method is suited for changing operation on a storage medium from a current file system to a new or updated file system, including the steps:
- while keeping valid or active data items of said current file system, writing on said storage medium new or updated file system data items except a data item required for activating or validating said new or updated file system data items;
- writing on said storage medium a data item for activating or validating said new or updated file system data items that were written before, thereby activating or validating said new or updated file system.

Advantageous additional embodiments of the invention are disclosed in the respective dependent claims.

### Drawings

Exemplary embodiments of the invention are described with reference to the accompanying drawings, which show in:
- Fig. 1: flow diagram of the inventive file system data change process;
- Fig. 2: file system data status before starting a new session;
- Fig. 3: preparatory storage of new file system data items;
- Fig. 4: assigning the entry point to the new file system;
- Fig. 5: validated new or updated file system data items;
- Fig. 6: file system data status for write-once media before starting a new session;
- Fig. 7: preparatory storage of new file system data items for write-once media;
- Fig. 8: assigning the entry point to the new file system for write-once media;
- Fig. 9: validated new or updated file system data items for write-once media;
- Fig. 10: carrying out the invention for re-writable media having separated areas for file system and file data items, depicted in physical layer having separated areas for file system and file data items;
- Fig. 11: carrying out the invention for write-once media having separated areas for file system and file data items, depicted in physical layer;
- Fig. 12: carrying out the invention for re-writable media having non-separated areas for file system and file data items, depicted in physical layer having separated areas for file system and file data items;
- Fig. 13: carrying out the invention for write-once media having non-separated areas for file system and file data items, depicted in physical layer;
- Fig. 14: carrying out the invention for re-writable and write-once media having non-separated areas for file system and file data items, depicted in physical layer.

### Exemplary embodiments

As mentioned above, the file system update will be done as completely as possible by writing a parallel file system, i.e. all directories are written in unused blocks of the disc. Generally, only in the case of a disc eject or power switch off request the minimum amount of remaining file descriptors is written to the disc for switching from the old file system to the new file system. Also, if a user has not operated his device for a long time it may be useful to update the file system in order to avoid a possible power failure. After such a switch, the old file system represents now unused blocks. These may be used to continue this strategy, i.e. to start again a new parallel file system.
The case that a power failure could lead to an inconsistency between the original file and its redundant copy is also solved by also storing both files in parallel to the old original and its redundant file.

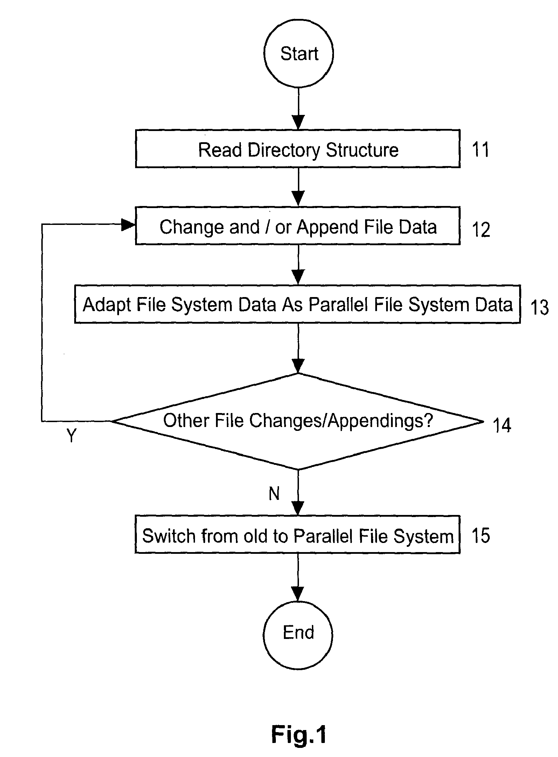

As shown in Fig. 1 the inventive processing starts in step 11 with reading the disc directory structure. In step 12 a command to change and/or to append file data is given. In step 13 the new file system data are stored as parallel file system data, but are not yet validated. In step 14 a check is carried out whether or not there are other file change or appending requests. If true, the processing continues with step 12. If not true, a switch is made from the old file system data to the new file system data, i.e. the new file system data are validated.

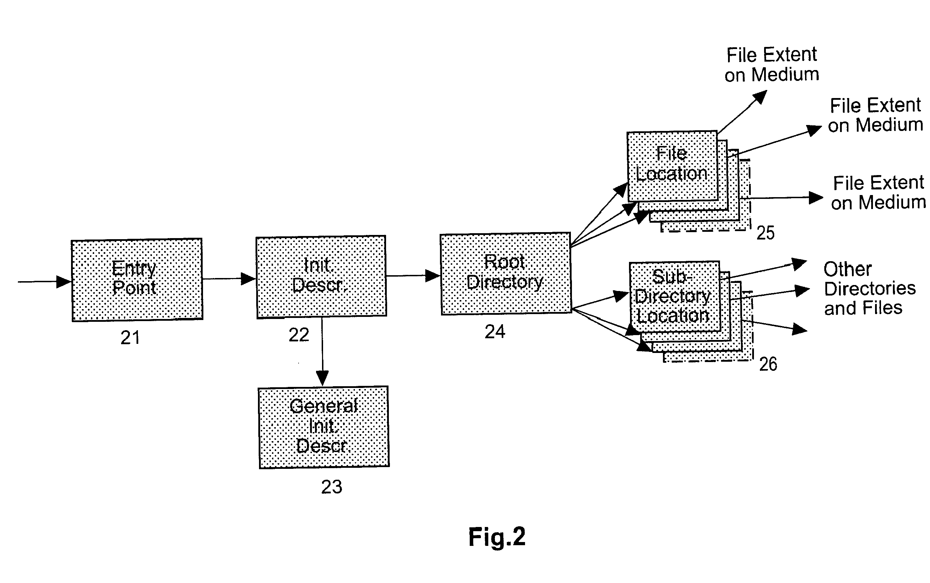

Figures 2 to 5 show a general way for carrying out a well-synchronized process to change file data of a memory medium, e.g. an optical disc or a hard disk. The process shown represents a comprehensive session for an optical disc (e.g. CD-R/RW, DVD-R/RW, DVD+R/RW, DVD-RAM, BD-R/RE) that conforms to the ISO 9660 or UDF (version 1.02 to 2.50) or UDF Bridge file systems.
In Fig. 2 the file system data status before starting a new session is depicted, i.e. no file has been changed yet. The grey or hatched blocks denote valid file system data. An entry point 21 facilitates access to the file system. In an UDF file system it refers to sector 256 on the storage medium (cf. ECMA-167 standard, section 8.4.2.1). It is called anchor volume descriptor pointer. In an ISO 9660 file system it refers to a special descriptor in Volume descriptor sequence beginning at sector 16 on the storage medium (cf.
ECMA-119 standard, section 6.3). This special descriptor is called Primary Volume Descriptor. The entry point data point to an initial descriptors data field 22 (e.g. to dedicated sectors or sections on the storage medium), which itself includes pointers to a general initial descriptors data field 23 (e.g. to other dedicated sectors or sections on the storage medium). The initial descriptors data include e.g. information about where partitions are arranged on the disc, which character sets are used, or copy right data items. The data items to which the above pointers refer play no role in this invention. For implementing the invention merely the availability of the correct pointers is required.
The initial descriptors data field 23 includes one or more pointers to the root directory 24 of the storage medium, i.e. the basic directory for the file structure. The root directory contains pointers to multiple file location data items 25 on the storage medium, which file location data items each define the extent of a file on the storage medium. The root directory may also contain pointers to multiple subdirectory location data items 26 on the storage medium, which subdirectory location data items each define the extent of a directory or a file on the storage medium.

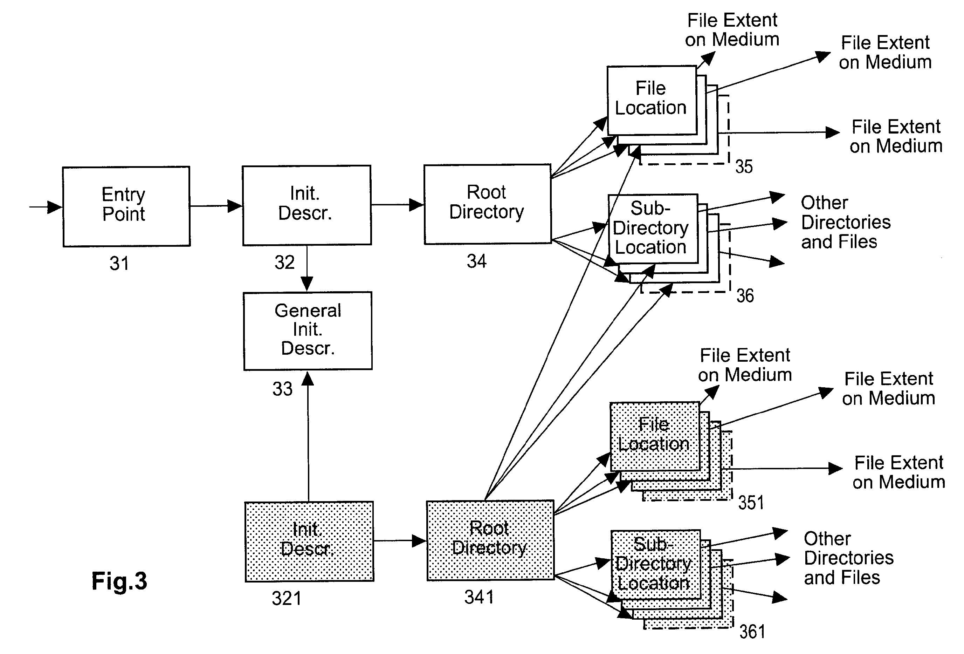

Fig. 3 shows the case just before ending the current session, i.e. after preparatory storage of new or updated file system data which have been changed and written to the storage medium. The grey or hatched blocks denote new and still invalid file system data which are written as a parallel file system but are not yet part of the valid file system data. These data items are prepared for a switch to the new file system data. Only the white blocks describe the valid file system data. The meaning of the blocks 31 to 36 corresponds to that of Fig. 2 blocks 21 to 26, respectively. New initial descriptors data field 321 (e.g. to dedicated sectors or sections on the storage medium), which itself includes pointers to the current general initial descriptors data field 23, includes one or more pointers to the new root directory 341. That root directory contains pointers to new multiple file location data items 351 on the storage medium, which file location data items each define the extent of a file on the storage medium. The new root directory may also contain pointers to multiple subdirectory location data items 361 on the storage medium, which subdirectory location data items each define the extent of a directory or a file on the storage medium, and may include pointers to such current files or directories which shall be valid also for the new file system data.

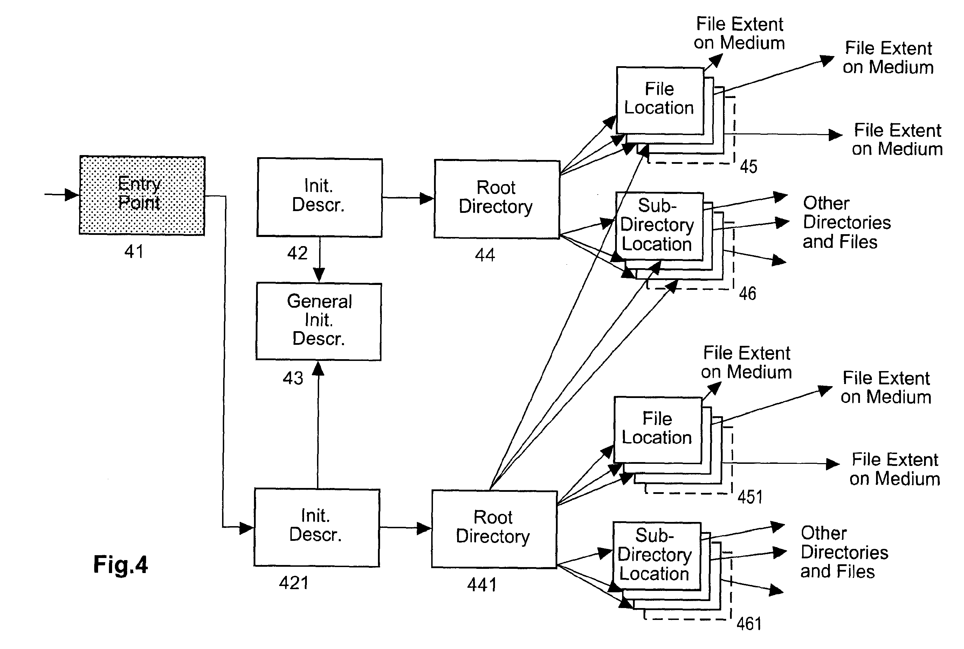

Fig. 4 shows the only critical processing step: when changing the entry point 41, i.e. assigning it from the current to the new file system (e.g. Primary Volume Descriptor for ISO 9660, or Anchor Volume Descriptor Pointer(s) for UDF). The meaning of the data items of blocks 42 to 46 and 421 to 461 corresponds to the respective ones of figures 2 and 3. It is possible that there is more then one entry point, e.g. more then one Anchor Volume Descriptor Pointer for UDF. In such case an other 'entry point' can be manipulated or switched, e.g. the File Entry of the Root Directory in the case of UDF, because this entry exists once only.

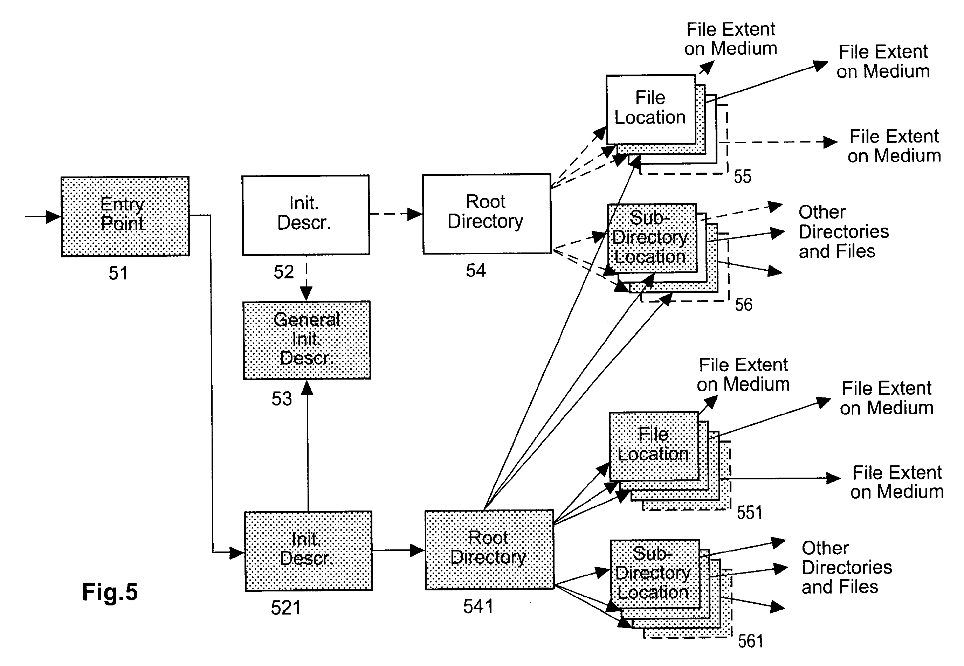

Fig. 5 shows the valid new or updated file system data items after having changed the critical point. The grey or hatched blocks indicate the currently valid file system data whereas the white blocks are not used anymore, i.e. the white blocks are not part of the current valid file system data items. The meaning of the data items of blocks 52 to 56 and 521 to 561 corresponds to that of figures 2 and 3.

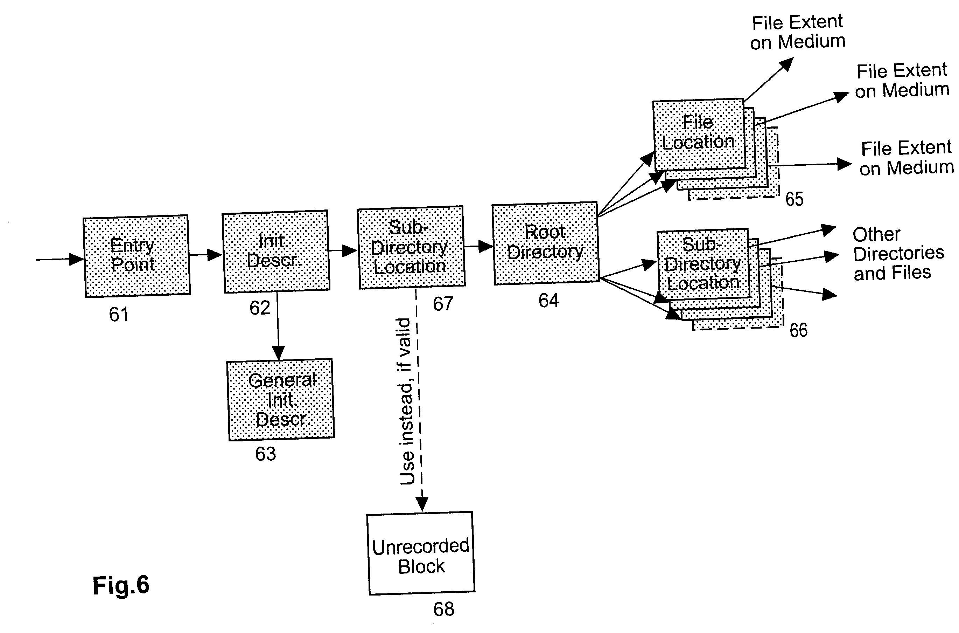

Figures 6 to 9 show a different way of performing a parallel file system data item writing which is applicable in particular for write-once media in combination with the UDF file system as applied for some CD, DVD and Blu-ray write-once discs.
In Fig. 6 shows the starting of a new session, i.e. no logical file changes or file writings have been carried out yet. The grey or hatched blocks denote valid file system data. The meaning of the blocks 61 to 66 corresponds to that of Fig. 2 blocks 21 to 26, respectively. However, with respect to the system depicted in Fig. 2, the initial descriptors 62 point to a subdirectory location 67 (i.e. a UDF file entry) which has two pointers, one of which points to the root directory 64. This location information to the root directory is a conditional pointer to the currently valid directory, e.g. a UDF File Entry with strategy 4096 (cf. UDF specification Revision 2.50, section 6.6 Algorithm for Strategy Type 4096). A 'conditional pointer' is a pointer that is valid only while there is no new replacement pointer. Actually there are two pointers for one UDF File Entry. One pointer indicates the location of the directory (or file), the other pointer indicates a location of the new pointer, if any. If the second pointer points to an unrecorded block 68, then there is no new pointer, i.e. the first pointer is still valid. But if the second pointer points to a recorded block, then there is a new pointer, i.e. the first pointer becomes invalid. Thereafter this other block is investigated in the same way. Thereby a nearly endless updating processing is feasible for write-once media.

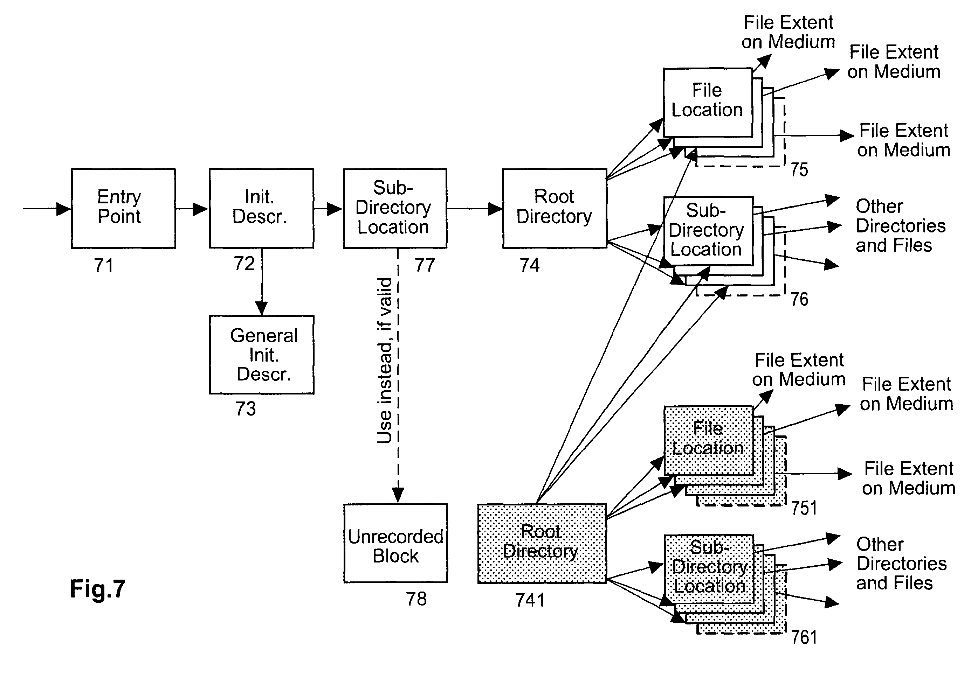

Fig. 7 shows the case just before ending the current session, i.e. after preparatory storage of new or updated file system data which have been changed and written to the storage medium. The grey or hatched blocks denote new and still invalid file system data which are written as a parallel file system but are not yet part of the valid file system data. These data items are prepared for a switch to the new file system data. Only the white blocks describe the valid file system data, except the unrecorded block 78. The meaning of the blocks 71 to 78 corresponds to that of Fig. 6 blocks 61 to 68, respectively. New root directory 741 contains pointers to new multiple file location data items 751 on the storage medium, which file location data items each define the extent of a file on the storage medium. The new root directory may also contain pointers to multiple subdirectory location data items 761 on the storage medium, which subdirectory location data items each define the extent of a directory or a file on the storage medium, and may include pointers to such current files or directories which shall be valid also for the new file system data.

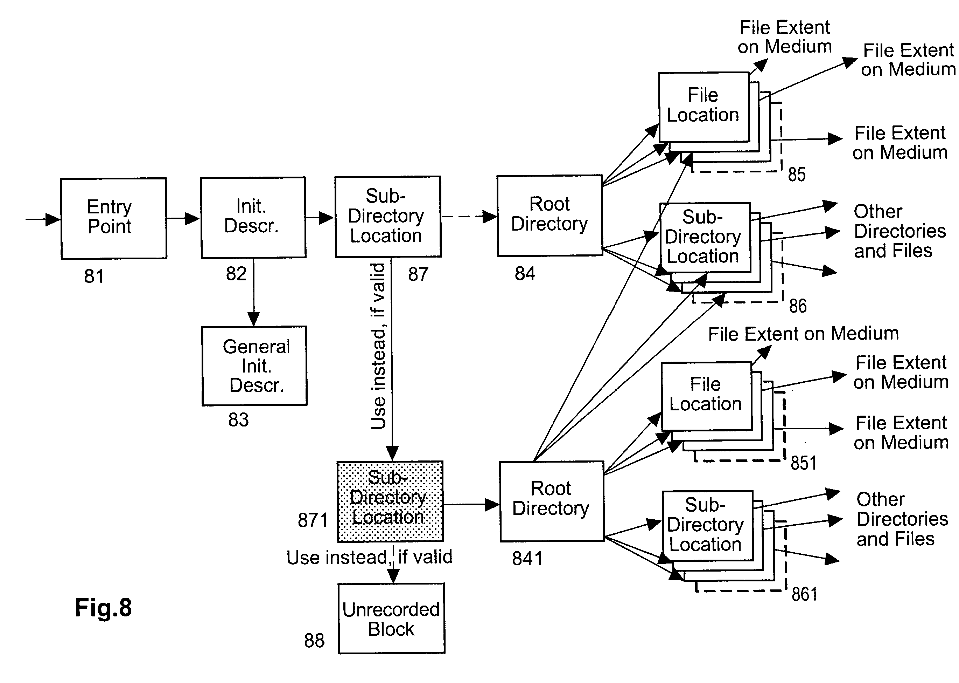

Fig. 8 shows the only critical processing step: when writing the unrecorded block 78 (in Fig. 7) containing the new pointer to the location of new root directory 841. This means that the previous sub-directory location no longer points to a valid directory, but the new recorded subdirectory location indicator 871 (e.g. a UDF File Entry) points now to the valid root directory 841. It is possible to use more then one entry point. For example, if only a sub-sub-directory is changed there is no need to replace the root directory. Only the necessary changes are performed in order to save time and memory. The grey or hatched block is the only file system data item that is written in this critical step of the processing. The meaning of the data items of blocks 81 to 88 and 841 to 861 corresponds to the respective ones of figures 6 and 7.

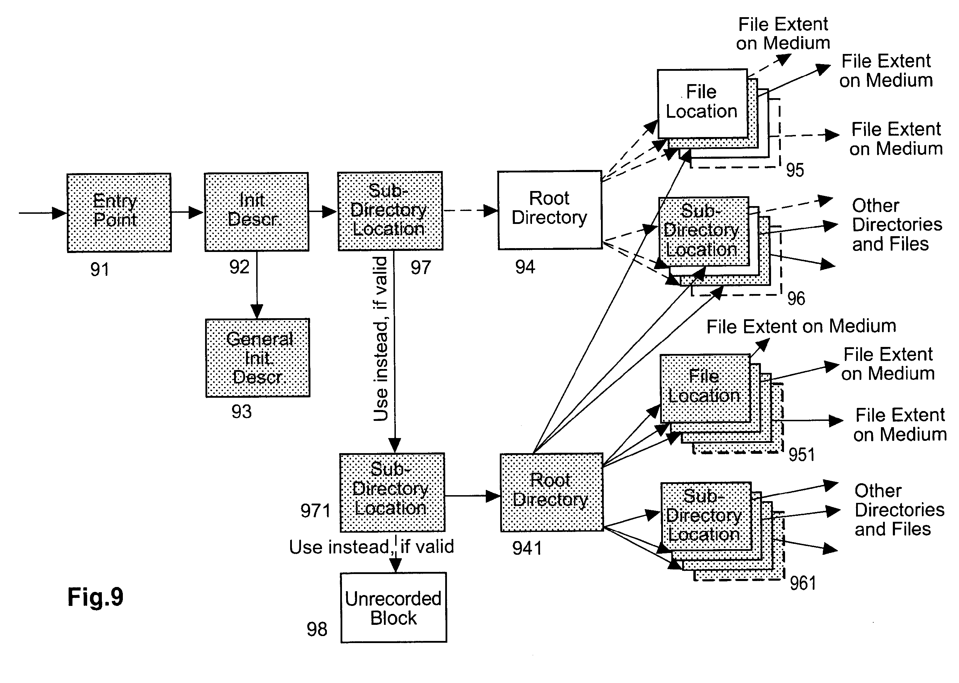

Fig. 9 shows the valid new or updated file system data items after having changed the critical point. The grey or hatched blocks indicate the currently valid file system data whereas the white blocks are not used anymore, i.e. the white blocks are not part of the current valid file system data items. The meaning of the data items of blocks 91 to 98 and 941 to 961 corresponds to that of Fig. 8.

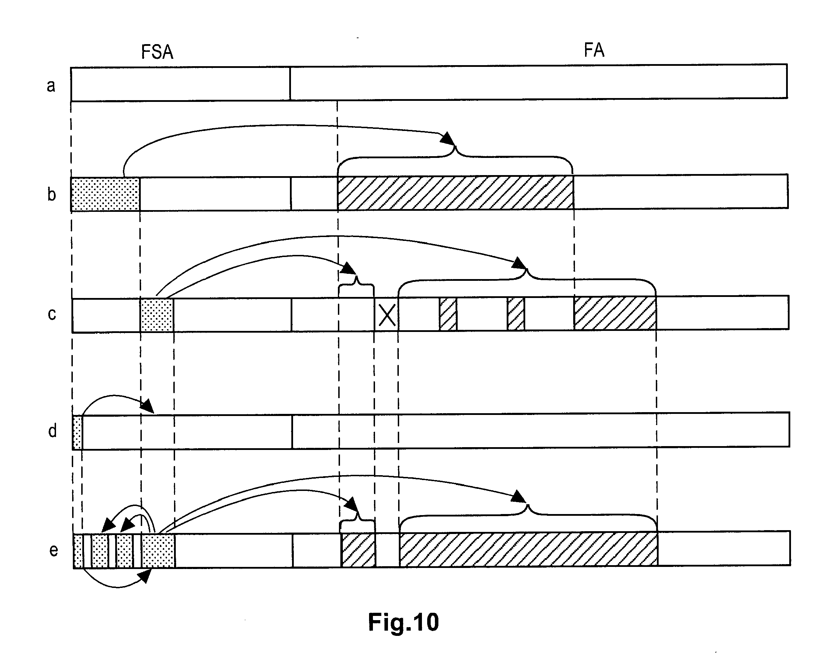

Figures 2 to 9 show what happens on the logical level during the file system updating process. Figures 10 to 14 show what happens on the physical level. The storage medium may have a file system area FSA separated from a file area FA, or a common data area DA for the file system and the related files.
In figures 10 to 14 letter 'a' indicates an interim status just after formatting the medium, and letter 'b' indicates the occupancies on the storage medium after N sessions, N≥1, i.e. letter 'b' is related to figures 2 or 6. The bright grey or thinly hatched parts show file system data items (22, 23, 24; 62, 63, 64, 67) and the dark grey or more densely hatched parts show file data items (25, 26; 65, 66). Letter 'c' indicates the status just before finishing session N+1, i.e. letter 'c' is related to figures 3 or 7. The bright grey or thinly hatched parts show new file system data items (321, 341; 741) and the dark grey or more densely hatched parts show new file data items (351, 361; 751, 761). Letter 'd' indicates the critical process step, i.e. it is related to figures 4 or 8. The bright grey or thinly hatched part shows a new entry point 41 or a new subdirectory location 871.
Letter 'e' indicates the valid new file system data and is related to figures 5 or 9. The bright grey or thinly hatched parts indicate the now valid file system data items (51, 53, 521, 541; 91, 92, 93, 97, 971, 941) and the dark grey or more densely hatched parts indicate the now valid file data items (55 partly, 56 partly, 551, 561; 95 partly, 96 partly, 951, 961), whereby the file system data items provide the access to the file data items.
The arrows in figures 10 to 14 indicate which file system data item area points to which file data item area. An area denoted 'X' indicates a data block (i.e. one or more sectors or sections) on the storage medium the status of which has been changed to 'unused block', or 'unused blocks', i.e. neither the file system nor the referred files make use of this block any longer.

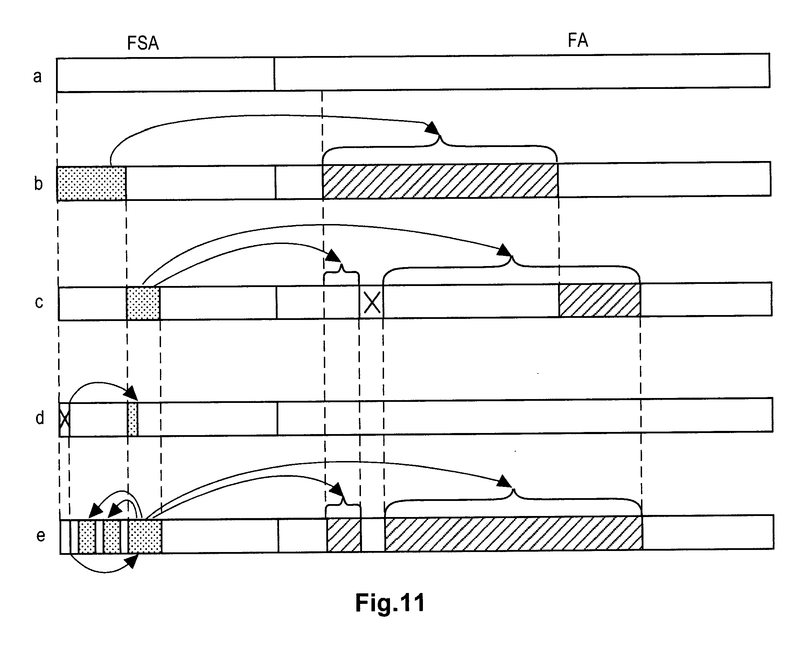

Fig. 10 and 11 show a file system which uses separated areas of the disc for file system data items and for file data items like e.g. the formats Minix, Jafs, or UDF 2.50 with Metadata. Other file systems may be stored in this way, too, e.g. ISO 9660 and UDF 1.02 up to UDF 2.01.

Fig. 10 depicts a system related to figures 2 to 5, which works with re-writable media only, because part areas of the occupied areas in Fig. 10b are re-used and the critical step is an overwriting of a physical block.

Fig. 11 describes a system related to figures 6 to 9, which works with write-once media, but would work as well with re-writable media. The critical step is an invalidation of a physical block, see Fig. 11d. That step can be carried out by a drive level based defect management, i.e. by translating the logical block number to the new block address, or by using file system level mechanisms like the Virtual Allocation Table as proposed in the UDF standard since version 1.50.

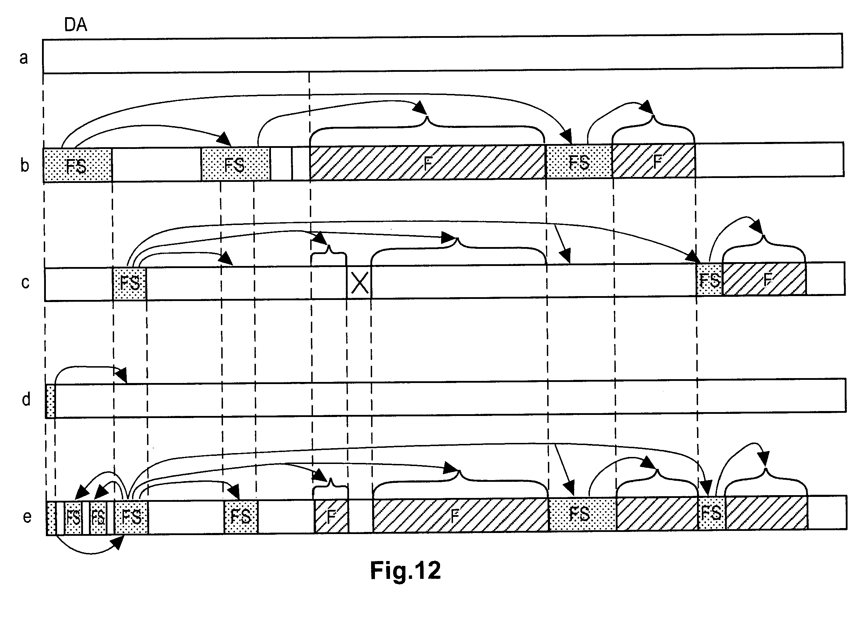

The Fig. 12 to 14 show file systems which can intersperse their file data items F with file system data items FS, e.g. all UDF versions, ISO 9660, or MS DOS.
Fig. 12 depicts a system related to figures 2 to 5, which works with re-writable media only, because part areas of the occupied areas in Fig. 12b are re-used and the critical step is an overwriting of a physical block.

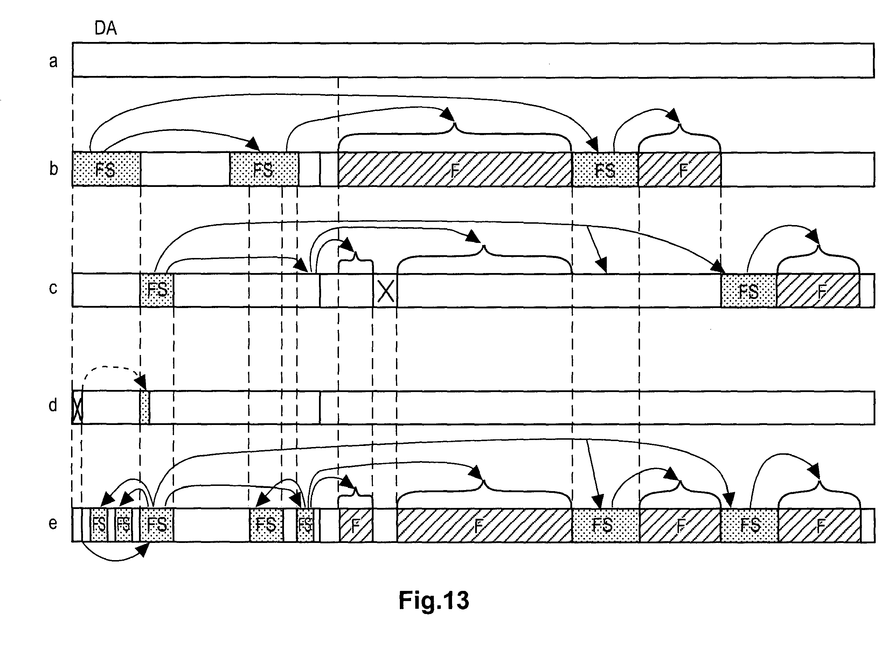

Fig. 13 describes a system related to figures 6 to 9, which works with write-once media, but would work as well with re-writable media. The critical step is an invalidation of a physical block, see Fig. 13d. That step can be carried out by a drive level based defect management, i.e. by translating the logical block number to the new block address, or by using file system level mechanisms like the Virtual Allocation Table as proposed in the UDF standard since version 1.50.

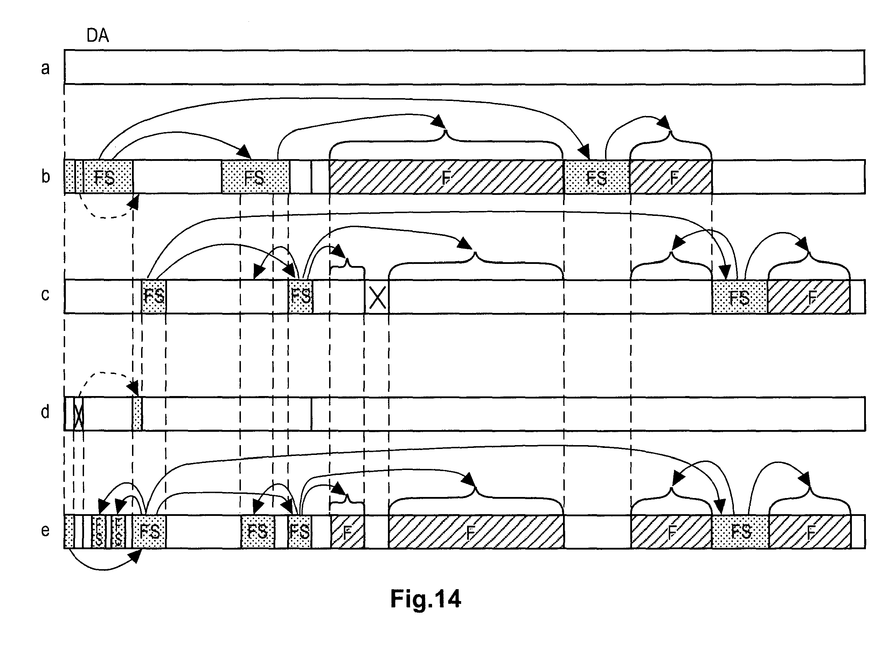

Fig. 14 describes a system related to figures 6 to 9, which works with write-once media, but would work as well with re-writable media. The critical step is an invalidation of a physical block, see Fig. 14d. That step can be carried out by the UDF strategy type 1, 2, 3, or 4096.

## Claims

1. Method for changing operation on a storage medium from a current file system to a new or updated file system, **characterised by** the steps:
- while keeping valid or active data items (21-26; 61-67) of said current file system, writing (13) on said storage medium new or updated file system data items (51, 53, 521-561; 91-93, 97, 941-971) except a data item (21, 71) required for activating or validating said new or updated file system data items;
- writing (15) on said storage medium a data item (21, 71) for activating or validating said new or updated file system data items that were written before, thereby activating or validating said new or updated file system.

2. Method according to claim 1, wherein said storage medium is a re-writable optical disc.

3. Method according to claim 1, wherein said storage medium is a write-once optical disc.

4. Method according to one of claims 1 to 3, wherein said storage medium is a DVD disc or a BD disc.

5. Method according to one of claims 1 to 4, wherein said data item (21, 71) for activating or validating said new or updated file system data items is written following a power failure in a recorder into which said storage medium is inserted, whereby that write operation is carried out using shortly remaining power in said recorder.

6. Method according to one of claims 1 to 5, wherein said file system is a UDF, or an ISO 9660 or a UDF Bridge file system.

7. Method according to claim 6, wherein said data item for activating or validating said new or updated file system data items is a UDF entry point (21, 71) or Anchor Volume Descriptor Pointer.
